# EUROPÄISCHE PATENTSCHRIFT

(11) **EP 4 091 697 B1**
(45) Veröffentlichungstag und Bekanntmachung des Hinweises auf die Patenterteilung: **28.08.2024**
(21) Anmeldenummer: 22185230.4
(22) Anmeldetag: 02.03.2015
(51) Int. Cl.: B01D 45/08

(54) **SET ZUR REINIGUNG EINES LUFTSTROMS**
SEPARATION SYSTEM FOR PAINT OVERSPRAY
DISPOSITIF POUR ELIMINER DES EXCES DE PEINTURE HUMIDE

(30) Priorität: 07.04.2014 AT 2602014
(43) Veröffentlichungstag der Anmeldung: 23.11.2022
(62) Teilanmeldung aus: 16192585.4
(73) Patentinhaber: Brain Flash-Patententwicklungs GmbH, 9900 Lienz (AT)
(72) Erfinder: Gavran, Jadranko, 9900 Lienz (AT); Eder, Michael, 9900 Lienz (AT)
(74) Vertreter: Dilg, Haeusler, Schindelmann Patentanwaltsgesellschaft mbH

(56) Entgegenhaltungen:
- WO-A2-03/084638
- DE-U1- 202007 013 656
- GB-A- 2 140 707
- JP-U- S6 187 511
- US-A- 3 744 222
- US-A- 5 922 110

## Beschreibung

Die vorliegende Erfindung betrifft ein Set zur Reinigung eines Luftstroms.

Die modulare Anordnung von Filtermodulen aus Karton ist aus der WO 03/084638 A2 bekannt. Sie dienen der Abscheidung von Lackpartikeln bzw. von Lacknebel (overspray) aus einer Abluft einer Sprühkabine, in welcher beispielsweise Teile für ein KFZ lackiert werden.

Bemerkenswert ist hierbei, dass eine sehr große Vielzahl an verschiedenen Lacken verwendet wird. Dadurch sind in der Abluft von Sprühkabinen verschiedenste Arten von Lackverunreinigungen vorhanden, welche sich beispielsweise durch Partikelgröße und Feuchtigkeitsanteil unterscheiden. Für relativ kleine, trockene Partikel müssen zur Abscheidung Labyrinthe mit kleinen Öffnungen und starken Umlenkungen bereit gestellt werden, sodass die Partikel durch Ihre Trägheit (bzw. durch die Fliehkraft) an Prallwänden des Labyrinths bzw. des Abscheiders gestoppt werden, während die gereinigte Luft hinter dem Filtermodul austritt.

Bei großen Partikelgrößen mit hohem Feuchtigkeitsanteil kann über kurze Zeit eine große Menge von Lack in einem Reinigungsmodul abgeschieden werden. Insbesondere dann, wenn die Reinigungsmodule im Boden der Sprühkabine angeordnet sind, resultiert dies in einer großen Belastung des aus Karton gefertigten Reinigungsmoduls, welche durch die Sogwirkung eines Gebläses zur Erzeugung des Luftstroms durch die Reinigungsmodule noch vergrößert wird. Dies führt bei Reinigungsmodulen nach dem Stand der Technik dazu, dass die darin vorhandenen Abscheidestrukturen unter ihrem mit Lack beladenen Eigengewicht zusammenfallen und ihre Funktion nicht mehr erfüllen.

Aufgabe der Erfindung ist es, ein Set aus einem Hohlkörper und Reinigungsteilstrukturen zu schaffen, welche einen verbreiterten Anwendungsbereich erlauben, d. h. zur Abscheidung von Lackpartikeln und Lacknebel mit größerer Vielfalt geeignet sind, als dies im Stand der Technik der Fall ist.

Diese Aufgabe wird durch ein Set mit den Merkmalen des Anspruchs 1 gelöst.

Erfindungsgemäß geschieht dies, indem das Set einen Hohlkörper aufweist, welcher eine Eintrittsöffnung für den Eintritt eines zu reinigenden Luftstroms und eine Austrittsöffnung für den Austritt des gereinigten Luftstroms aufweist, sowie mehreren Reinigungsteilstrukturen als Abscheidestrukturen zur Reinigung des Luftstroms durch Abscheidung von Partikeln und/oder zur Filtration des Luftstroms. Durch die Bereitstellung eines Sets, in welchem zumindest zwei verschiedene Kombinationen von Reinigungsteilstrukturen im Hohlkörper anordenbar sind, kann eine noch breitere Anwendbarkeit erzielt werden.

Insbesondere kann es vorgesehen sein, dass Reinigungsteilstrukturen und/oder die Reinigungsmodule unabhängig voneinander austauschbar sind.

Weitere vorteilhafte Ausführungsformen sind in den abhängigen Ansprüchen definiert.

Um auch sehr feine Lacknebel aus dem Luftstrom entfernen zu können, kann es vorgesehen sein, dass die wenigstens zwei Reinigungsteilstrukturen eine Filterstruktur umfassen. Derartige Filterstrukturen können verschiedenartig ausgebildet sein. Beispielsweise kann hier eine Matte oder ein Flies aus Glasfasern zum Einsatz kommen. Bevorzugte Dicken solcher Matten oder Vliese liegen bevorzugt unter 20 cm und besonders bevorzugt unter 10 cm. Außerdem kann als Filtermaterial sogenanntes Columbusmaterial verwendet werden. Dieses besteht aus Papier, vorzugsweise Altpapier, in welches parallele und versetzte Schlitze gestanzt oder geschnitten sind. Durch Zug quer zu den Schlitzen entstehen Öffnungen. Mehrere Lagen dieses Materials können vorteilhaft als Filtermaterial verwendet werden.

Abscheidestrukturen können ebenfalls auf verschiedene Arten ausgestaltet sein. Beispielsweise können diese nach dem Auffalten in einer Draufsicht rechteckige Strukturen sein. Aber auch rautenförmige Strukturen sind bekannt (beispielsweise vertrieben unter der Bezeichnung "Andreae").

Reinigungsmodule können in Einschubrahmen angeordnet werden. Diese Einschubrahmen können sich über eine Wand, die Decke oder den Boden der Sprühkabine erstrecken. In diesen Einschubrahmen können die Reinigungsmodule hintereinander angeordnet und einzeln herausgenommen bzw. ersetzt werden.

Die zumindest zwei Reinigungsteilstrukturen können zumindest eine Abscheidestruktur zur Reinigung eines Luftstroms aufweisen, wobei die wenigstens eine Abscheidestruktur vorzugsweise wenigstens zwei, in Richtung des Luftstroms aufeinanderfolgende Prallwände, welche mit Öffnungen versehen sind, umfasst.

Der Abscheidestruktur kann durch das Vorsehen zumindest einer Stabilisierungswand eine erhöhte Stabilität verliehen werden.

Es kann vorgesehen sein, dass die wenigstens eine Stabilisierungswand mit den wenigstens zwei Prallwänden in Verbindung steht.

Es kann außerdem vorgesehen sein, dass die wenigstens eine Stabilisierungswand mit den wenigstens zwei Prallwänden faltbar und/oder gelenkig in Verbindung steht.

Des Weiteren kann vorgesehen sein, dass die wenigstens eine Stabilisierungswand im Wesentlichen parallel zum Luftstrom ausgerichtet ist.

Bevorzugt vorgesehen können Abscheidestrukturen in verschiedenen geometrischen Abmessungen, insbesondere Stärken, vorgesehen sein.

Ebenso können Abscheidestrukturen vorgesehen sein, welche, insbesondere durch die Größe der Öffnungen, auf die Abscheidung von Partikeln unterschiedlicher Größe optimiert sind. Insbesondere können die Abscheidestrukturen so gestaltet sein, dass diejenigen mit größeren geometrischen Abmessungen, insbesondere Stärken, auf die Abscheidung größerer Partikel optimiert sind und umgekehrt.

Dies ermöglicht eine genaue Anpassung des Reinigungsmoduls an die vorliegende Verschmutzung im Luftstrom (Partikelgröße, Feuchtigkeitsgrad). Dies ermöglicht außerdem ein selektives Tauschen von hintereinander angeordneten Reinigungsmodulen, was von Vorteil ist, da auf verschiedene Partikelgrößen optimierte Abscheidestrukturen unterschiedlich schnell ihre Kapazitätsgrenze erreichen.

Weiterhin von Vorteil ist, dass die durch die selektive Tauschbarkeit der Reinigungsmodule Lagerhaltung im geringeren Umfang notwendig ist.

Für einen guten Sitz der Reinigungsteilstrukturen im Hohlkörper kann es vorgesehen sein, dass die Reinigungsteilstrukturen in einer Ansicht entlang einer Achse, welche beim im Hohlkörper angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers im Wesentlichen entspricht. Dies stellt außerdem sicher, dass kein Teilstrom des Luftstroms ungereinigt bleibt, weil kein Weg an den Reinigungsteilstrukturen vorbeiführt.

Besonders bevorzugt kann es vorgesehen sein, dass zumindest eine Abscheidestruktur zusammenfaltbar ist. Durch das verringerte Volumen wird die Lagerung und der Transport der Abscheidestrukturen erheblich erleichtert.

Dieser Effekt verstärkt sich noch, falls vorgesehen ist, dass die zumindest eine Abscheidestruktur nach dem Zusammenfalten im Wesentlichen flach ist.

Die verstärkende Wirkung einer Stabilisierungswand kann verbessert werden, indem das Zusammenfalten der Abscheidestruktur beim im Hohlkörper angeordneten Zustand durch Innenwandungen des Hohlkörpers gehemmt ist.

Bevorzugt kann es vorgesehen sein, dass die wenigstens eine Stabilisierungswand im Wesentlichen mittig bezüglich einer Richtung in der Ebene der Prallwände angeordnet ist. Dies kann die Verstärkungswirkung der Stabilisierungswand optimieren.

Die wenigstens eine Stabilisierungswand kann mit den wenigstens zwei Prallwänden verbunden sein, wobei dies vorzugsweise auf faltbare und/oder gelenkige Art und Weise der Fall ist. Einfach realisierbar ist dies beispielsweise über ein Filmscharnier. Dies ermöglicht eine sehr flache Struktur im zusammengefalteten Zustand, welche im entfalteten Zustand eine hohe Steifigkeit aufweist.

Weiterhin kann es bevorzugt vorgesehen sein, dass die wenigstens eine Stabilisierungswand im Wesentlichen parallel zum Luftstrom ausgerichtet ist. Denn insbesondere dann, wenn das Reinigungsmodul in einem Boden oder einer Decke einer Sprühkabine angeordnet ist, entspricht die Richtung des Luftstroms derjenigen Richtung der Hauptbelastung der Abscheidestruktur.

Ganz besonders bevorzugt kann es vorgesehen sein, dass der Hohlkörper und/oder zumindest eine Abscheidestruktur aus Karton, Papier oder Pappe besteht. Ein besonders einfaches Beseitigen bzw. Recyclen der Abscheidestrukturen bzw. der Reinigungsmodule wird hierdurch ermöglicht. Es ist aber durchaus auch denkbar Abscheidestrukturen und/oder Hohlkörper aus Metall, Kunststoff, Holz oder dergleichen zu fertigen.

In einer weiteren bevorzugten Ausführung kann vorgesehen sein, dass zumindest eine Abscheidestruktur wenigstens zwei im Wesentlichen parallel zum Luftstrom ausgerichtete Laschen aufweist, zwischen denen im Hohlkörper eine weitere Abscheidestruktur anordenbar ist. Dadurch ist es möglich, dass eine Abscheidestruktur für verschiedene vorgesehene geometrische Abmessungen, insbesondere Stärken, dient. Das bedeutet, sie kann entweder mit einer zwischen den Laschen angeordneten Abscheidestruktur eingesetzt werden, oder ohne. In letzterem Fall dienen die Laschen als Abstandhalter zu einer Innenwandung des Hohlkörpers oder einer weiteren Abscheidestruktur.

Weitere Vorteile und Einzelheiten der Erfindung sind anhand der Figuren, sowie der dazugehörigen Figurenbeschreibung ersichtlich. Dabei zeigen:
Fig. 1a bis 1h : verschiedene perspektivische, schematische Darstellungen Reinigungsmodule zum besseren Verständnis der Erfindung,
Fig. 2a bis 2h : perspektivische Darstellungen einer Abscheidestruktur in verschiedenen Faltzuständen zum besseren Verständnis der Erfindung,
Fig. 3a bis 3c : eine weitere Ausführungsform einer erfindungsgemäßen Abscheidestruktur in verschiedenen Faltzuständen
Fig. 4a und 4b : schematische Darstellungen verschiedener Kombinationsmöglichkeiten von Abscheidestrukturen in Reinigungsmodulen zum besseren Verständnis der Erfindung, sowie
Fig. 5a bis 5e : Darstellungen von Anordnungsmöglichkeiten von Reinigungsmodulen in Einschubrahmen zum besseren Verständnis der Erfindung.

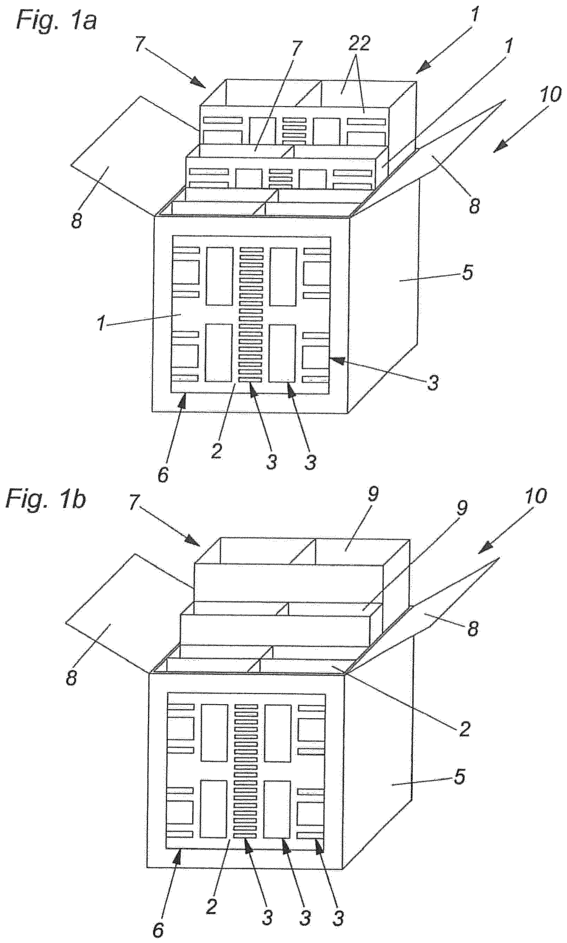

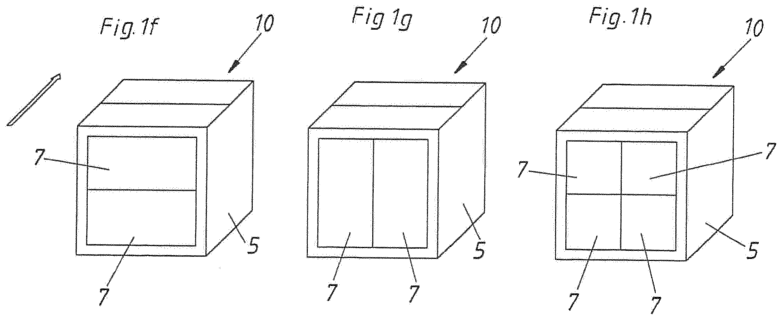

Das in Figur 1a dargestellte Reinigungsmodul 10 umfasst zunächst einen Hohlkörper 5, sowie eine Eintrittsöffnung 6 zum Eintritt des zu reinigenden Luftstroms. Da die Austrittsöffnung auf der Rückseite des Hohlkörpers 5 angeordnet ist, kann sie in diesen Darstellungen nicht erkannt werden. Die Austrittsöffnung ist im Wesentlichen analog zur Eintrittsöffnung 6 ausgebildet.

Der Hohlkörper 5 verfügt über - als Öffnungslaschen ausgebildete - Öffnungselemente 8. Diese sind in der vorliegenden Darstellung geöffnet, sodass der Blick aufs Innenleben des Hohlkörpers 5 frei wird. In Figur 1a sind mehrere Reinigungsteilstrukturen 7 dargestellt, welche in diesem Fall allesamt als Abscheidestrukturen 1 ausgebildet sind. Die Abscheidestrukturen 1 verfügen über Prallwände 2, welche mit Öffnungen 3 versehen sind. Der Übersichtlichkeit halber sind nicht alle Prallwände 2 und alle Öffnungen 3 mit Bezugszeichen versehen, da diese teilweise in einer Vielzahl vorliegen.

Figur 1b ist analog zu Figur 1a nur mit dem Unterschied, dass zwei der Reinigungsteilstrukturen 7 als Filterstrukturen 9 ausgebildet sind. Diese Filterstrukturen 9 umfassen Glasfasermatten oder Vliese, können aber auch Columbusmaterial oder ähnliches umfassen.

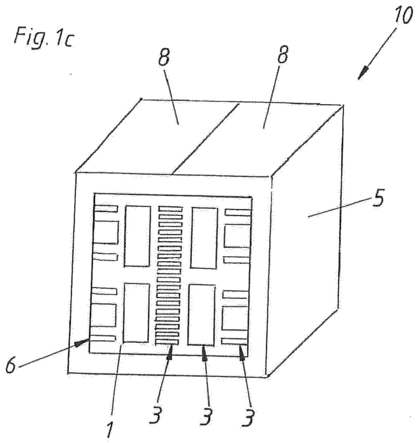

In Figur 1c ist erneut das Reinigungsmodul 10 dargestellt, dieses Mal jedoch mit geschlossenen Öffnungselementen 8. In diesem Zustand kann das Reinigungsmodul eingesetzt werden.

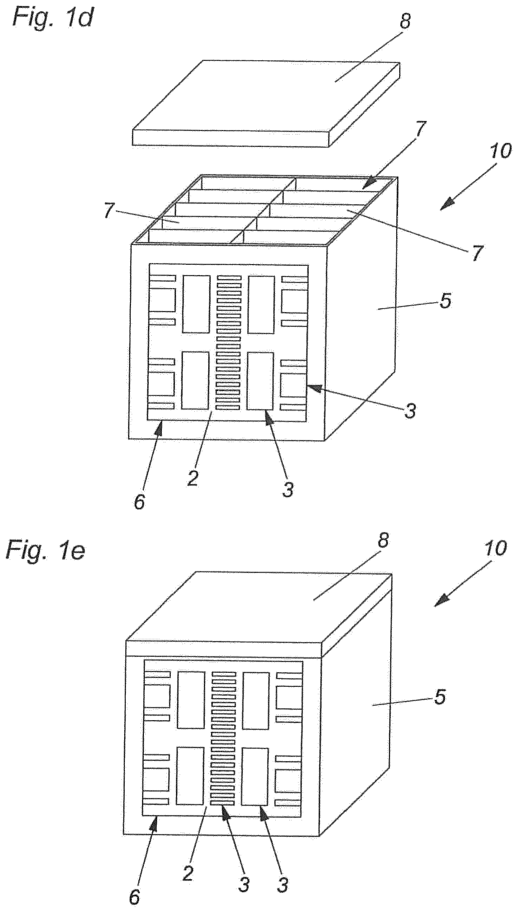

Die Öffnungselemente 8 können auch als abnehmbarer Deckel ausgeführt sein (schuhkartonartig), was in den Figuren 1d und 1e dargestellt ist. Ansonsten ist das Reinigungsmodul 10 aus den Figuren 1d und 1e analog zu denen aus den Figuren 1a bis 1c .

In den Figuren 1f bis 1h sind weitere Ausführungsformen dargestellt, wobei sich die Reinigungsteilstrukturen 7 in diesen Fällen nicht über die gesamte Querschnittsfläche (aus sicht des Luftstroms, welcher neben Figur 1f durch einen Pfeil angedeutet ist) des Hohlkörpers 5 erstrecken.

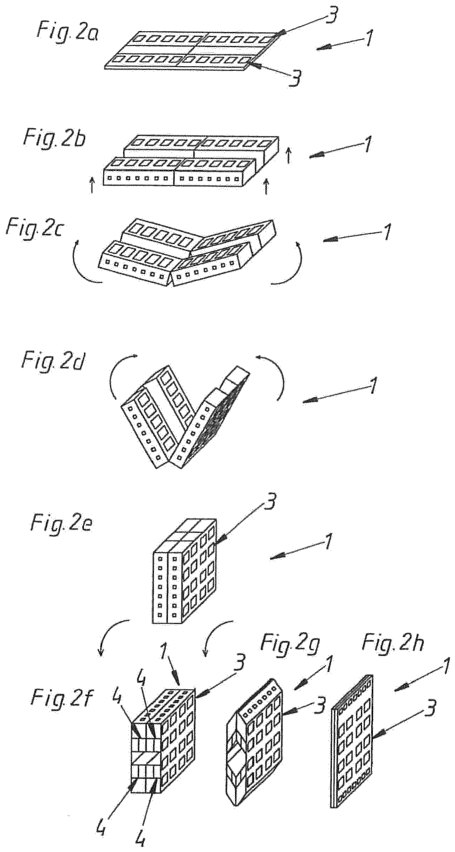

In den Figuren 2a bis 2h ist eine erste Ausführungsform einer Abscheidestruktur 1 in verschiedenen Faltzuständen zum besseren Verständnis der Erfindung dargestellt. Figur 2a zeigt dabei zunächst die Abscheidestruktur 1 im Auslieferungszustand. Teile der Struktur werden dann aufgefaltet ( Figur 2b ). Die gesamte Abscheidestruktur 1 wird danach noch einmal zusammengefaltet, wobei die in Figur 2b aufgefalteten Teile zueinander weisen.

Dann liegt die Abscheidestruktur 1 so vor, dass sie bei einem Reinigungsmodul 10 eingesetzt werden kann ( Figur 2e). Figur 2f entspricht Figur 2e , wobei die Abscheidestruktur 1 gedreht dargestellt ist, was durch Pfeile verdeutlicht ist. Nach dem Gebrauch in einem Reinigungsmodul 10, beispielsweise beim Entsorgen des Reinigungsmoduls 10, kann die Abscheidestruktur 1 durch eine einzige Faltoperation ( Figur 2g ) im Wesentlichen flach gemacht werden ( Figur 2h ). Dies kann die Entsorgung vereinfachen.

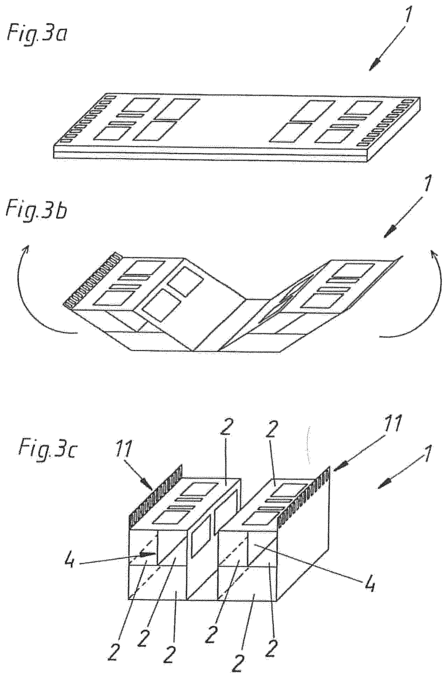

Die Figuren 3a bis 3c zeigen eine weitere erfindungsgemäße Abscheidestruktur 1. Diese kann aus dem Auslieferungszustand ( Figur 3a ) durch eine Faltoperation ( Figur 3b ), welche mit Pfeilen angedeutet ist, in den Betriebszustand versetzt werden ( Figur 3c ). An diesem Ausführungsbeispiel ist besonders deutlich die Anordnung der Stabilisierungswände 4 zwischen den Prallwänden 2 ersichtlich. Die Stabilisierungswände 4 sind im Wesentlichen mittig bezüglich einer Richtung in der Ebene der Prallwände 2 angeordnet. Zu erkennen sind ebenfalls Laschen 11, zwischen welchen einerseits weitere Abscheidestrukturen 1 angeordnet werden können - um Platz zu sparen - und welche andererseits als Abstandshalter fungieren können, sodass die Abscheidestruktur 1 fest im Reinigungsmodul 10 sitzt.

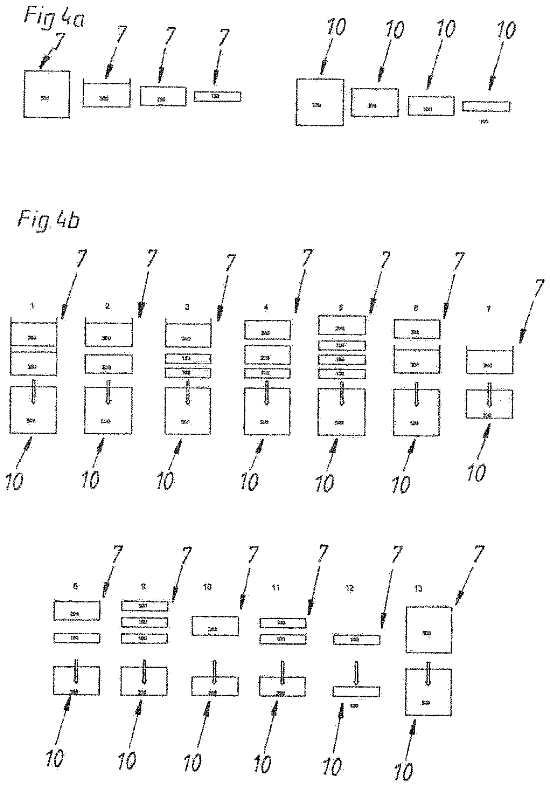

In den Figuren 4a und 4b sind schematisch Reinigungsteilstrukturen 7 verschiedener geometrischer Dimensionen, insbesondere Stärke, sowie verschiedene Kombinationen ihrer Anordnung in einem Reinigungsmodul 10 dargestellt. Die Reinigungsteilstrukturen 7 sind in dieser Ausführung in drei verschiedenen Stärken von 100 mm, 200 mm, 300 mm oder 500 mm vorgesehen, wobei die Stärken jeweils auf den Reinigungsteilstrukturen 7 vermerkt sind. Ähnlich gibt es Reinigungsmodule 10 in verschiedenen Ausführungsformen, welche sich durch die Gesamtstärke an Reinigungsteilstrukturen 7, welche sie in der Lage sind aufzunehmen, unterscheiden. Auch hier sind die verschiedenen Gesamtstärken 100 mm, 200 mm, 300 mm oder 500 mm auf den Reinigungsmodulen 10 vermerkt.

In Figur 4b sind einige verschiedene Kombinationsmöglichkeiten dargestellt, welche durchnummeriert sind. Bei den Ausführungen 1 bis 6 dient jeweils ein Reinigungsmodul 10, welches Reinigungsteilstrukturen 7 mit einer Gesamtstärke von 500 mm aufnehmen können. Bei den Ausführungen 7 bis 9 nimmt das Reinigungsmodul 10 Reinigungsteilstrukturen mit Gesamtstärke von 300 mm auf.

Die Ausführungen 10 und 11 betreffen Reinigungsmodule 10 mit 200 mm Gesamtstärke. Ausführungsform 12 betrifft ein Reinigungsmodul mit 100 mm Gesamtstärke. Ausführungsform 13 betrifft ein Reinigungsmodul mit 500 mm Gesamtstärke Die verschiedenen Kombinationsmöglichkeiten sind daraus ersichtlich.

Zu bemerken ist, dass die Reinigungsteilstruktur 7, welche 300 mm stark ist, über Laschen 11 verfügt. Der Übersichtlichkeit halber sind nicht alle Laschen 11 mit Bezugszeichen versehen. Dadurch kann diese als Abscheidestruktur 1 ausgeführte Reinigungsteilstruktur 7 als Reinigungsteilstruktur 7 mit Stärke 300 mm (Ausführungsformen 6 und 7 in Figur 4b ) oder mit Stärke 200 mm (Ausführungsform 1 aus Figur 4b ) dienen.

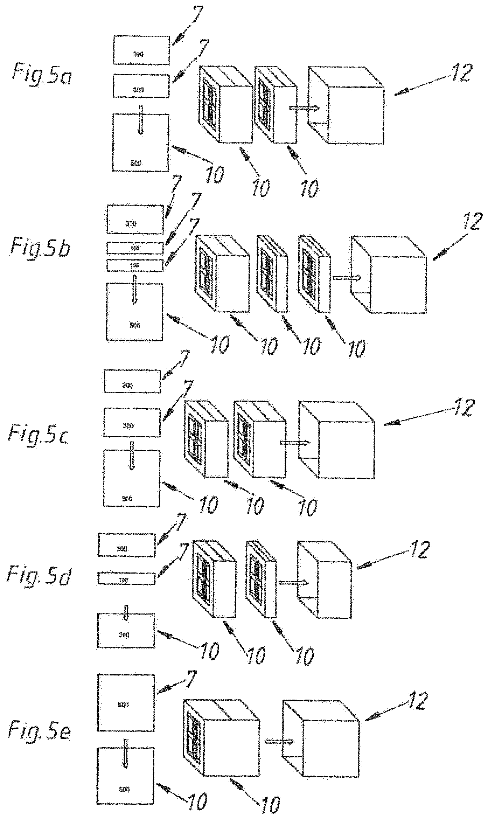

Reinigungsmodule 10 können hintereinander in Einschubrahmen 12 angeordnet werden. Auch hier sind verschiedene Kombinationen möglich was zum einen schematisch (links) und zum anderen perspektivisch (rechts) jeweils in den Figuren 5a bis 5e dargestellt ist. Bevorzugt werden Reinigungsmodule 10, welche auf gröbere Lackverunreinigungen bzw. Lacktröpfchen optimiert sind dem verunreinigten Luftstrom zugewandt angeordnet. Diese können dann einzeln gewechselt werden. Diejenigen Reinigungsmodule 10, welche ihre Kapazitätsgrenze später erreichen, können länger in den Einschubrahmen 12 verweilen.

## Patentansprüche

1. Set aus einem Hohlkörper (5), welcher eine Eintrittsöffnung (6) für den Eintritt eines zu reinigenden Luftstroms und eine Austrittsöffnung für den Austritt des gereinigten Luftstroms aufweist, sowie mehreren Reinigungsteilstrukturen (7) als Abscheidestrukturen (1) zur Reinigung des Luftstroms durch Abscheidung von Partikeln und/oder zur Filtration des Luftstroms, wobei zumindest zwei der Reinigungsteilstrukturen (7) die Abscheidestruktur (1) zur Reinigung eines Luftstroms aufweisen,
**dadurch gekennzeichnet, dass**
zumindest zwei verschiedene Kombinationen von Reinigungsteilstrukturen (7) im Hohlkörper (5) anordenbar sind,
wobei zumindest eine Abscheidestruktur (1) wenigstens zwei im Wesentlichen parallel zum Luftstrom ausgerichtete Laschen (11) aufweist, zwischen denen im Hohlkörper eine weitere Abscheidestruktur (1) anordbar ist,
wobei die Laschen (11) derart konfiguriert sind, dass die Laschen (11) als Abstandhalter zu einer Innenwandung des Hohlkörpers (5) oder einer weiteren Abscheidestruktur (1) anordbar sind.

2. Set nach Anspruch 1,
wobei die Reinigungsteilstrukturen (7) über ein Öffnungselement (8) am Hohlkörper (5) aus dem Hohlkörper (5) entnehmbar und/oder im Hohlkörper (5) anordenbar ist.

3. Set nach Anspruch 1 oder 2, **dadurch gekennzeichnet, dass** die wenigstens zwei Reinigungsteilstrukturen (7) eine Filterstruktur (9) umfassen.

4. Set nach einem der Ansprüche 1 bis 3, **dadurch gekennzeichnet, dass** Abscheidestrukturen (1) in verschiedenen geometrischen Abmessungen, insbesondere Stärken (100, 200, 300), vorgesehen sind.

5. Set nach einem der Ansprüche 1 bis 4, **dadurch gekennzeichnet, dass** der Hohlkörper (5) im Wesentlichen quaderförmig ist.

6. Set nach einem der Ansprüche 1 bis 5,**dadurch gekennzeichnet, dass** die Reinigungsteilstrukturen (7) in einer Ansicht entlang einer Achse, welche beim im Hohlkörper (5) angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers (5) im Wesentlichen entspricht.

7. Set nach einem der Ansprüche 1 bis 6, **dadurch gekennzeichnet, dass** die wenigstens eine Abscheidestruktur (1) vorzugsweise wenigstens zwei, in Richtung des Luftstroms aufeinanderfolgende Prallwände (2), welche mit Öffnungen (3) versehen sind, umfasst.

8. Set nach Anspruch 7, **dadurch gekennzeichnet,**
**dass** zwischen den wenigstens zwei Prallwänden (2) wenigstens eine quer zu den Prallwänden (2) ausgerichtete Stabilisierungswand (4) angeordnet ist.

9. Set nach Anspruch 7 oder 8, **dadurch gekennzeichnet, dass** die zumindest eine Abscheidestruktur (1) zusammenfaltbar ist.

10. Set nach Anspruch 9, **dadurch gekennzeichnet,**
**dass** die zumindest eine Abscheidestruktur (1) nach dem Zusammenfalten im Wesentlichen flach ist.

11. Set nach Anspruch 9 oder 10, **dadurch gekennzeichnet, dass** das Zusammenfalten der Abscheidestruktur (1) beim im Hohlkörper (5) angeordneten Zustand durch Innenwandungen des Hohlkörpers (5) gehemmt ist.

12. Set nach einem der Ansprüche 7 bis 11, **dadurch gekennzeichnet, dass** zumindest eine Abscheidestruktur (1) quer zu einer Richtung des Luftstroms versetzte und/oder entlang der Richtung des Luftstroms in ihrer Größe unterschiedliche Öffnungen (3) aufweist.
wobei insbesondere die Größe der Öffnungen auf die Abscheidung von Partikeln unterschiedlicher Größe abgestimmt sind.

13. Set nach einem der Ansprüche 1 bis 12, **dadurch gekennzeichnet, dass** der Hohlkörper (5) und/oder zumindest eine Abscheidestruktur (1) aus Karton, Papier oder Pappe besteht.

## Claims

1. Set of a hollow body (5) which comprises an inlet opening (6) for inletting an airflow to be cleaned and an outlet opening for outletting the cleaned airflow, and multiple cleaning substructures (7) as separating structures (1) for cleaning the airflow by a separation of particles and/or for a filtration of the airflow, wherein at least two of the cleaning substructures (7) comprise the separating structure (1) for cleaning an airflow,
**characterized in that**
at least two different combinations of cleaning substructures (7) are arrangeable in the hollow body (5),
wherein at least one separating structure (1) comprises at least two flaps (11) which are aligned substantially parallel to the airflow, between which in the hollow body a further separating structure (1) is arrangeable,
wherein the flaps (11) are configured such that the flaps (11) are arrangeable as a spacer to an inner wall of the hollow body (5) or a further separating structure (1).

2. Set according to claim 1,
wherein the cleaning substructures (7), via an opening element (8) at the hollow body (5), are removable from the hollow body (5) and/or are arrangeable in the hollow body (5).

3. Set according to claim 1 or 2, **characterized in that**
the at least two cleaning substructures (7) encompass a filter structure (9).

4. Set according to one of the claims 1 to 3, **characterized in that**
the separating structures (1) are provided with different geometrical dimensions, in particular thicknesses (100, 200, 300).

5. Set according to one of the claims 1 to 4, **characterized in that** the hollow body (5) is substantially cuboid.

6. Set according to one of the claims 1 to 5, **characterized in that**
the cleaning substructures (7), in a view along an axis which is substantially parallel to the airflow in a state arranged in the hollow body (5), comprise an outline which substantially corresponds to a cross-section of a hollow space of the hollow body (5) which is preferably perpendicular to the airstream.

7. Set according to one of the claims 1 to 6, **characterized in that**
the at least one separating structure (1) encompasses preferably at least two impact walls (2) which are successively arranged in the direction of the airflow, which are provided with openings (3).

8. Set according to claim 7, **characterized in that**
between the at least two impact walls (2) at least one stabilizing wall (4) is arranged which is aligned transversely to the impact walls (2).

9. Set according to claim 7 or 8, **characterized in that** the at least one separating structure (1) is foldable.

10. Set according to claim 9, **characterized in that**
the at least one separating structure (1) after folding is substantially flat.

11. Set according to claim 9 or 10, **characterized in that**
folding the separating structure (1), in the state arranged in the hollow body (5), is prevented by inner walls of the hollow body (5).

12. Set according to one of the claims 7 to 11, **characterized in that**
at least one separating structure (1) comprises openings (3) which are offset transversely to a direction of the airflow and/or are different in their size along the direction of the airflow;
wherein in particular the size of the openings is matched to the separation of particles of different sizes.

13. Set according to one of the claims 1 to 12, **characterized in that**
the hollow body (5) and/or at least one separating structure (1) consists of cardboard, paper or paper board.

## Revendications

1. Ensemble composé d'un corps creux (5) présentant un orifice d'entrée (6) destiné à l'entrée d'un flux d'air à épurer et un orifice de sortie destiné à la sortie du flux d'air épuré, ainsi que de plusieurs sous-structures d'épuration (7) faisant office de structures de séparation (1) permettant d'épurer le flux d'air par séparation des particules et/ou permettant de filtrer le flux d'air, dans lequel au moins deux des sous-structures d'épuration (7) présentent la structure de séparation (1) permettant d'épurer un flux d'air,
**caractérisé en ce que**
au moins deux combinaisons différentes de sous-structures d'épuration (7) peuvent être agencées dans le corps creux (5),
dans lequel au moins une structure de séparation (1) présente au moins deux languettes (11) orientées de manière essentiellement parallèle au flux d'air et entre lesquelles une structure de séparation (1) supplémentaire peut être agencée dans le corps creux,
dans lequel les languettes (11) sont configurées de telle manière que les languettes (11) peuvent être agencées comme des entretoises par rapport à une paroi intérieure du corps creux (5) ou à une autre structure de séparation (1) .

2. Ensemble selon la revendication 1,
dans lequel les sous-structures d'épuration (7) peuvent être retirées du corps creux (5) et/ou peuvent être agencées dans le corps creux (5) par l'intermédiaire d'un élément d'orifice (8) situé au niveau du corps creux (5).

3. Ensemble selon la revendication 1 ou 2, **caractérisé en ce que**
les au moins deux sous-structures d'épuration (7) comprennent une structure de filtre (9).

4. Ensemble selon l'une quelconque des revendications 1 à 3, **caractérisé en ce que**
des structures de séparation (1) sont fournies dans différentes dimensions géométriques, en particulier dans différentes épaisseurs (100, 200, 300).

5. Ensemble selon l'une quelconque des revendications 1 à 4, **caractérisé en ce que**
le corps creux (5) est essentiellement de forme parallélépipédique.

6. Ensemble selon l'une quelconque des revendications 1 à 5, **caractérisé en ce que**
les sous-structures d'épuration (7), considérées le long d'un axe essentiellement parallèle au flux d'air lorsqu'elles sont agencées dans le corps creux (5), présentent un contour correspondant essentiellement à une section transversale, de manière préférée perpendiculaire au flux d'air, d'une cavité du corps creux (5).

7. Ensemble selon l'une quelconque des revendications 1 à 6, **caractérisé en ce que**
la au moins une structure de séparation (1) comprend de manière préférée au moins deux déflecteurs (2) qui se succèdent dans la direction du flux d'air et sont munis d'orifices (3).

8. Ensemble selon la revendication 7, **caractérisé en ce que**
entre au moins deux déflecteurs (2) est agencée au moins une paroi de stabilisation (4) orientée de manière transversale par rapport aux déflecteurs (2).

9. Ensemble selon la revendication 7 ou 8, **caractérisé en ce que**
la au moins une structure de séparation (1) peut être pliée.

10. Ensemble selon la revendication 9, **caractérisé en ce que**
la au moins une structure de séparation (1) est essentiellement plate après le pliage.

11. Ensemble selon la revendication 9 ou 10, **caractérisé en ce que**
le pliage de la structure de séparation (1), lorsqu'elle est agencée dans le corps creux (5), est empêché grâce à des parois intérieures du corps creux (5).

12. Ensemble selon l'une quelconque des revendications 7 à 11, **caractérisé en ce que**
au moins une structure de séparation (1) présente des orifices (3) qui sont décalés de manière transversale par rapport à la direction du flux d'air et/ou qui sont de différentes tailles le long de la direction du flux d'air,
dans lequel la taille des orifices est en particulier adaptée à la séparation de particules de tailles différentes.

13. Ensemble selon l'une quelconque des revendications 1 à 12, **caractérisé en ce que** le corps creux (5) et/ou au moins une structure de séparation (1) est/sont constitué(s) de papier, de carte ou de carton.
